Europäisches Patentamt

European Patent Office

Office européen des brevets

(11) Veröffentlichungsnummer: **0 257 110 B1**

# EUROPÄISCHE PATENTSCHRIFT

(45) Veröffentlichungstag der Patentschrift: **06.05.92**

(51) Int. Cl.5: **H04J 13/00**, H04B 1/66, H04Q 7/04

(21) Anmeldenummer: **86111249.8**

(22) Anmeldetag: **14.08.86**

(54) **Digitales Zellenfunksystem.**

(43) Veröffentlichungstag der Anmeldung:
**02.03.88 Patentblatt  88/09**

(45) Bekanntmachung des Hinweises auf die
Patenterteilung:
**06.05.92 Patentblatt  92/19**

(84) Benannte Vertragsstaaten:
**AT CH DE FR GB IT LI NL**

(56) Entgegenhaltungen:
**EP-A- 0 151 280**
**GB-A- 2 125 654**

(73) Patentinhaber: **Standard Elektrik Lorenz Aktiengesellschaft
Lorenzstrasse 10
W-7000 Stuttgart 40(DE)**

(72) Erfinder: **Langewellpott, Ulrich, Dr.
Sulzgrieser Steige 23/5
W-7300 Esslingen(DE)**

(74) Vertreter: **Graf, Georg Hugo, Dipl.-Ing. et al
Standard Elektrik Lorenz AG Patent- und Lizenzwesen Postfach 30 09 29
W-7000 Stuttgart 30(DE)**

**Beschreibung**

Die Erfindung bezieht sich auf einen Empfänger eines digitalen Zellenfunksystemes und auf ein Verfahren zum Betrieb eines digitalen Zellenfunksystemes gemäß dem Oberbegriff des Anspruchs 1 und dem Oberbegriff des Anspruches 7.

Aus der EP 0 151 280 A1 ist ein digitales Zellenfunksystem mit Zeitmultiplexbetrieb bekannt. Jeder in einem Zeitschlitz übertragenen digitalen Nachricht ist eine Synchronisationspräambel vorangestellt. Benachbarte Zellen verwenden unterschiedliche Synchronisationspräambeln und unterschiedliche Zeichensätze zur Spreizung des Informationsgehaltes.

Das bekannte Zellenfunksystem hat den Nachteil, daß beim Betrieb mit vielen Zellen eine Gleichkanalunterdrückung nur mit einem enormen Aufwand an Speicherplatz auf der Empfängerseite zu erzielen ist.

Aufgabe der Erfindung ist es daher, einen Empfänger für ein digitales Zellenfunksystem und ein Verfahren zum Betrieb eines digitalen Zellenfunksystemes anzugeben, bei dem eine befriedigende Gleichkanalunterdrückung auch dann erreicht wird, wenn in jeder Zelle eine von den anderen Zellen verschiedene Synchronisationspräambel benutzt wird, jedoch in allen Zellen derselbe Zeichensatz für die Information.

Diese Aufgabe wird gelöst mit den im ersten Vorrichtungsanspruch sowie im ersten Verfahrensanspruch angegebenen Mitteln. Die abhängigen Ansprüche enthalten vorteilhafte Weiterbildungen der Erfindung.

Beim neuen digitalen Zellenfunksystem erfolgt die Unterdrückung von Gleichkanalstörungen, die aufgrund der Verwendung desselben Zeitschlitzes und derselben Trägerfrequenz in benachbarten Zellen auftreten, durch zwei Maßnahmen, nämlich durch die Verwendung unterschiedlicher Synchronisationspräambeln und durch Überlagerung des Informationsteils des Übertragungssignals mit einer Pseudo-Noise-Folge. Dadurch ist es nicht mehr erforderlich, zur Spreizung der Nachricht unterschiedliche (mindestens vier) orthogonale Zeichensätze zu verwenden, und es ergeben sich nun vorteilhafterweise statistische Korrelationseigenschaften bei der Zeichenkorrelation. Die Pseudo-Noise-Folge muß so lang sein, daß sie sich über mehrere Zeichen erstreckt. Jeder Empfänger bzw. Sender enthält einen Speicher S, in dem der einzige Zeichensatz, zumindest die Hauptteile der zu verwendenden Synchronisationspräambeln und die Pseudo-Noise-Folge abgespeichert sind.

Jede Synchronisationspräambel besteht aus einem Vorlauf, dem Hauptteil und einem Nachlauf, wobei der Vorlauf dieselbe Bitfolge enthält wie die zweite Hälfte des Hauptteils und der Nachlauf dieselbe Bitfolge aufweist wie die erste Hälfte des Hauptteils.

In einem bevorzugten Ausführungsbeispiel sind zumindest die Hauptteile von sechs unterschiedlichen Synchronisationspräambeln mit je 127 chip und 32 unterschiedliche Zeichencodes mit je 32 bit abgespeichert. Als Pseudo-Noise-Folge ist der Hauptteil der in der jeweils betrachteten Zelle benutzten Synchronisationspräambel gewählt, dem ein 128. chip hinzugefügt ist.

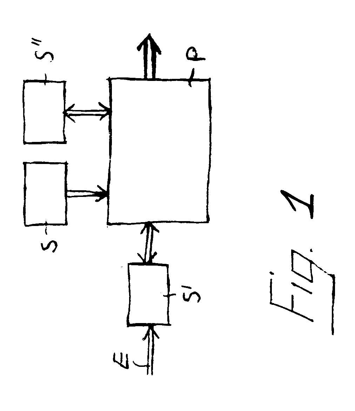

Zwei Beispiele für Signalverarbeitungsverfahren in einem Empfänger für dieses Zellenfunksystem werden nachfolgend anhand der einzigen Figur erläutert.

Der Empfänger enthält einen ersten Speicher S', in dem das in einem Zeitschlitz empfangene, auf die Zwischenfrequenz Null umgesetzte, abgetastete, digitalisierte Empfangssignal E gespeichert ist, einen zweiten Speicher S, in dem die Synchronisationspräambeln oder deren Hauptteile und der Zeichensatz gespeichert sind, einen Prozessor P, der auch eine Korrelatorfunktion wahrnimmt, und einen dritten Speicher S″ zur Speicherung der Korrelationsergebnisse. Die Speicher S, S', S″ sind mit dem Prozessor P verbunden.

Beim ersten Verfahren wird im ersten Schritt die Synchronisationspräambel $SP_E$ des Empfangssignals E mit der im Speicher S gespeicherten Synchronisationspräambel SP korreliert. Als Ergebnis erhält man die Kanalimpulsantwort der Übertragungsstrecke Sender-Funkkanal-Analogteil des Empfängers und eine komplexe Zahl Z, die die Lage des betragsmäßig größten Anteils der Synchronisationspräambel im Empfangssignal E kennzeichnet. Beide Ergebnisse werden im Speicher S″ gespeichert.

Im zweiten Schritt wird der Nachlauf N der Synchronisationspräambel $SP_E$ mit der Kanalimpulsantwort korreliert (Matched-Filter-Konzept). Dadurch erhält man einen Nachlauf N', der von vielen auf der Übertragungsstrecke hinzugekommenen Stör- und Interferenzsignalen befreit ist. Er wird ebenfalls im Speicher S″ gespeichert.

Im dritten Schritt wird der Nachlauf N' mit dem im Speicher S befindlichen Nachlauf der Synchronisationspräambel SP korreliert. Im Idealfall stimmen beide Nachläufe überein, in der Realität sind sie jedoch unterschiedlich. Aus der Abweichung des erhaltenen Korrelationsergebnisses zum ideal möglichen und der komplexen Zahl Z wird durch den Prozessor ein mittlerer Winkelfehler pro Abtastwert des Empfangssignals E ermittelt, der beispielsweise auf Frequenzschwankungen des Empfängeroszillators oder Dopplereffekte bei bewegten Sendern und Empfängern zurückzuführen ist.

Im vierten Schritt wird das im Speicher S′ enthaltene Empfangssignal E durch den Prozessor P entsprechend dem im dritten Schritt ermittelten Winkelfehler modifiziert.

Im fünften Schritt wird der Informationsteil des modifizierten Empfangssignals mit der Kanalimpulsantwort korreliert (Matched-Filter-Konzept) und im Speicher S′ gespeichert.

Im sechsen Schritt wird der derart gefilterte Informationsteil von der Pseudo-Noise-Folge befreit, indem ihm noch einmal die Pseudo-Noise-Folge überlagert wird, und im Speicher S′ gespeichert.

Im siebenten Schritt wird der Informationsteil des im Speicher S′ enthaltenen Empfangssignals Zeichen für Zeichen mit allen Zeichen des im Speicher S gespeicherten Zeichensatzes korreliert, und aus der Vielzahl der Korrelationsergebnisse das größte ausgewählt, dem unter Berücksichtigung seines Vorzeichens eindeutig ein Zeichen zugeordnet wird, das einer in der Figur nicht dargestellten Einrichtung zur Signalauswertung, die insbesondere einen Decodierer und D/A-Wandler zur Rückgewinnung des Sprachsignals enthält, zugeführt ist.

Zur Verbesserung der Zeichenkorrelation kann in einem weiteren Schritt analog dem im dritten Schritt beschriebenen Verfahren, aus der Abweichung des bei einem Zeichen enthaltenen Korrelationsergebnisses zum ideal möglichen ein Korrekturwert ermittelt werden, der bei der Korrelation des nächstens Zeichens zu dessen Winkelkorrektur heranziehbar ist.

Besonders vorteilhaft ist es zwischen dem vierten und fünften Schritt als zusätzlichen Schritt die Kanalimpulsantwort durch eine verbesserte Kanalimpulsantwort zu ersetzen, die durch Korrelation der Synchronisationspräambel des modifizierten Empfangssignals, mit der im Speicher S gespeicherten Synchronisationspräambel SP ermittelt ist.

Beim zweiten Verfahren wird in einem ersten Schritt das im Speicher S′ enthaltene Empfangssignal E durch den Prozessor P um den bei der Verarbeitung des Empfangssignals des vorhergehenden Zeitschlitzes gewonnenen mittleren Winkelfehler pro Abtastwert modifiziert.

In einem zweiten Schritt wird, wie oben beschrieben, die Kanalimpulsantwort ermittelt.

In einem dritten Schritt wird das modifizierte Empfangssignal mit der Kanalimpulsantwort korreliert. Man erhält dadurch einen gefilterten Nachlauf N′, der in einem vierten Schritt wie oben beschrieben zur Ermittlung des mittleren Winkelfehlers pro Abtastwert herangezogen wird, und einen gefilterten Informationsteil, der in einem fünften Schritt wie oben beschrieben von der Pseudo-Noise-Folge befreit wird.

In einem sechsten Schritt erfolgt wie oben beschrieben die Zeichenkorrelation, die ebenfalls wie oben beschrieben durch Winkelkorrektur der empfangenen Zeichen verbessert sein kann.

Bei beiden Verfahren ist es vorteilhaft, bei den Korrelationen mit der Kanalimpulsantwort nur die Beiträge der Kanalimpulsantwort zu berücksichtigen, die über einem bestimmten Schwellwert liegen. Der Grund hierfür ist, daß das Matched-Filter-Konzept nur bezüglich des Einflusses von weißem Rauschen, nicht jedoch bei Nachbarzeicheninterferenzen optimal ist. Der günstigste Schwellwert liegt 12 dB unter dem Maximum der Kanalimpulsantwort.

**Patentansprüche**

1. Empfänger für ein digitales Zellenfunksystem, bei dem der Funkverkehr im Zeitmultiplex mit Vielfachzugriff und Spreizspektrumstechnik erfolgt, und bei dem in jedem Zeitschlitz der Zeitmultiplexübertragung das Übertragungssignal eine Synchronisationspräambel und einen Informationsteil enthält, und bei dem benachbarte Zellen unterschiedliche Synchronisationspräambeln verwenden,
   **gekennzeichnet** durch einen Prozessor (P), der durch Korrelation eines auf eine Zwischenfrequenz von 0 umgesetzten digitalisierten Empfangssignals mit der in einem Speicher (S) gespeicherten Synchronisationspräambel eine zum Übertragungskanal gehörende Kanalimpulsantwort und eine erste komplexe Zahl bestimmt, und weiterhin durch Korrelation des Nachlaufes der Synchronisationspräambel mit der Kanalimpulsantwort ein Nachlaufsignal gewinnt, weiterhin durch Korrelation des Nachlaufsignals mit dem gespeicherten Nachlauf eine zweite komplexe Zahl ermittelt, und aus der ersten komplexen Zahl zusammen mit der zweiten komplexen Zahl einen Winkelfehler pro Abtastwert berechnet.

2. Empfänger nach Anspruch 1, dadurch gekennzeichnet, daß der Prozessor (P) mit Hilfe des Winkelfehlers eine Winkelkorrektur des digitalisierten Eingangssignales vornimmt, daß der Prozessor weiterhin das korrigierte Empfangssignal mit der gespeicherten Synchronisationspräambel korreliert und eine verbesserte Impulsantwort gewinnt, daraufhin die verbesserte Impulsantwort mit dem Informationsteil des korrigierten Empfangssignales korreliert und anschließend jedes Zeichen des Informationsteiles mit jedem im Speicher (S) gespeicherten Zeichen korreliert.

**3.** Empfänger nach Anspruch 2, dadurch gekennzeichnet, daß der Prozessor (P) das digitalisierte Empfangssignal mit Hilfe des beim vorhergehenden Zeitschlitz berechneten Winkelfehlers korrigiert, daraufhin den Informationsteil mit der Kanalimpulsantwort korreliert und anschließend jedes Zeichen des Informationsteiles mit jedem Zeichen des im Speicher (S) abgespeicherten Zeichensatzes korrigiert.

**4.** Empfänger nach einem der Ansprüche 1 bis 3, dadurch gekennzeichnet, daß der Prozessor (P) den Informationsteil des Eingangssignales mit einer Pseudo-Noise-Folge multipliziert.

**5.** Empfänger nach einem der Ansprüche 1 bis 4, dadurch gekennzeichnet, daß der Prozessor (P) bei Korrelation mit der Kanalimpulsantwort (Matched-Filter-Konzept) nur die Anteile der Kanalimpulsantwort berücksichtigt, deren Betrag über einem bestimmten Wert liegt.

**6.** Empfänger nach einem der Ansprüche 1 bis 5, dadurch gekennzeichnet, daß der Prozessor bei zwei aufeinander folgenden Zeichen eine Winkelkorrektur des nachfolgenden Zeichens mit Hilfe der Korrelation der Zeichen des Informationsteiles mit dem gespeicherten Zeichensatz des vorangehenden Zeichens durchführt.

**7.** Verfahren zum Betrieb eines digitalen Zellenfunksystemes, bei dem der Funkverkehr im Zeitmultiplex mit Vielfachzugriff und Spreizspektrumstechnik erfolgt, und bei dem in jedem Zeitschlitz der Zeimultiplexübertragung das Übertragungssignal eine Synchronisationspräambel und einen Informationsteil enthält, und bei dem benachbarte Zellen unterschiedliche Synchronisationspräambeln verwenden, **dadurch gekennzeichnet,** daß ein auf eine Zwischenfrequenz von 0 umgesetztes digitalisiertes Empfangssignal mit der in einem Speicher (S) gespeicherten Synchronisationspräambel korreliert wird, um eine zum Übertragungskanal gehörende Kanalimpulsantwort und eine erste komplexe Zahl zu bestimmen, und daß weiterhin ein Nachlaufsignal durch Korrelation des Nachlaufes der Synchronisationspräambel mit der Kanalimpulsantwort gewonnen wird, und weiterhin durch Korrelation des Nachlaufsignales mit dem gespeicherten Nachlauf eine zweite komplexe Zahl ermittelt wird, die zusammen mit der ersten komplexen Zahl zur Berechnung eines Winkelfehlers pro Abtastwert dient.

**8.** Verfahren nach Anspruch 7, dadurch gekennzeichnet, daß in einem weiteren Schritt mit dem berechneten Wert des Winkelfehlers eine Winklekorrektur des digitalisierten Empfangssignales durchgeführt wird, daß in weiteren Schritten aus dem korrigierten Empfangssignal durch Korrelation mit der gespeicherten Synchronisationspräambel eine verbesserte Kanalimpulsantwort gewonnen wird, diese mit dem Informationsteil des korrigierten Empfangssignales korreliert wird, und danach jedes Zeichen des Informationsteiles mit jedem Zeichen des gespeicherten Zeichensatzes korreliert wird.

**9.** Verfahren nach Anspruch 7, dadurch gekennzeichnet, daß vor dem ersten Schritt mit dem von dem vorhergehenden Zeitschlitz bekannten Winkelfehler eine Winkelkorrektur des digitalisierten Empfangssignals durchgeführt wird, daß beim zweiten Schritt zusätzlich auch der Informationsteil mit der Kanalimpulsantwort korreliert wird und daß nach dem dritten Schritt jedes Zeichen des Informationsteils mit jedem Zeichen des Zeichensatzes korreliert wird.

**Claims**

**1.** A receiver for a digital cellular radio system wherein radio communication uses time-division multiple access and spread-spectrum techniques, wherein in each time slot of the time-division multiplex transmission, the transmitted signal contains a synchronization preamble and an information part, and wherein adjacent cells use different synchronization preambles,
**characterized** by a processor (P) which determines a channel response of the transmission channel and a first complex number by correlating a digitized received signal, converted to zero intermediate frequency, with the synchronization preamble stored in a memory (S), derives a trailer-record signal by correlating the trailer record of the synchronization preamble with the channel pulse response, determines a second complex number by correlating the trailer-record signal with the stored trailer record, and calculates an angle error per sample value from the first complex number and the second complex number.

**2.** A receiver as claimed in claim 1, characterized in that the processor (P) performs a angle correction on the digitized received signal using the angle error, that the processor correlates the corrected received signal with the stored synchronization preamble and derives an improved pulse response, then correlates the improved pulse response with the information part of the corrected received signal, and subsequently correlates each character of the information part with each character stored in the memory (S).

3. A receiver as claimed in claim 2, characterized in that the processor (P) corrects the digitized received signal using the angle error calculated in the preceding time slot, then correlates the information part with the channel pulse response, and subsequently corrects each character of the information part with each character of the character set stored in the memory (S).

4. A receiver as claimed in any one of claims 1 to 3, characterized in that the processor (P) multiplies the information part of the received signal with a pseudo-noise sequence.

5. A receiver as claimed in any one of claims 1 to 4, characterized in that in correlating the channel pulse response (matched-filter concept), the processor (P) takes into account only those portions of the channel pulse response which exceed a predetermined absolute value.

6. A receiver as claimed in any one of claims 1 to 5, characterized in that in the case of two successive characters, the processor performs an angle correction on the following character by correlating the characters of the information part with the stored character set of the preceding character.

7. A method of operating a digital cellular radio system wherein radio communication uses time-division multiple access and spread-spectrum techniques, wherein in each time slot of the time-division multiplex transmission, the transmitted signal contains a synchronization preamble and an information part, and wherein adjacent cells use different synchronization preambles, **characterized in** that a digitized received signal, converted to zero intermediate frequency, is correlated with the synchronization preamble stored in a memory (S) to determine a pulse response of a transmission channel and a first complex number, that a trailer-record signal is derived by correlating the trailer record of the synchronization preamble with the channel pulse response, and that by correlating the trailer-record signal with the stored trailer record, a second complex number is determined which is used together with the first complex number to calculate an angle error per sample value.

8. A method as claimed in claim 7, characterized in that in a further step, an angle correction is performed on the digitized received signal using the calculated value of the angle error, that in further steps, an improved channel pulse response is derived by correlating the corrected received signal with the stored synchronization preamble, said improved channel pulse response is correlated with the information of the corrected received signal, and each character of the information part is then correlated with each character of the stored character set.

9. A method as claimed in claim 7, characterized in that prior to the first step, an angle correction is performed on the digit zed received signal using the angle error known from the preceding time slot, that in the second step, the information part, too, is correlated with the channel pulse response, and that after the third step, each character of the information part is correlated with each character of the character set.

**Revendications**

1. Récepteur pour un système numérique de radiocommunication cellulaire dans lequel le trafic hertzien est réalisé en multiplexage temporel à accès multiple, et en technique d'étalage de spectre et dans lequel à chaque intervalle de temps de la transmission en multiplexage temporel, le signal de transmission comprend un préambule de synchronisation et une partie d'information, et dans lequel des cellules avoisinantes utilisent des préambules de synchronisation différents, caractérisé par un processeur (P) qui détermine, par corrélation d'un signal de réception numérisé et transformé à une fréquence intermédiaire de 0 avec un préambule de synchronisation qui est stocké dans une mémoire (S), une réponse d'impulsion de canal qui appartient au canal de transmission ainsi qu'un premier nombre complexe, et qui en plus obtient un signal d'en-queue à partir d'une corrélation de l'en-queue du préambule de synchronisation avec la réponse d'impulsion de canal, et qui génère en plus un deuxième nombre complexe par corrélation du signal d'en-queue avec l'enqueue stocké, et qui calcule une erreur angulaire pour chaque valeur d'échantillonnage à partir du premier nombre complexe et du deuxième nombre complexe.

2. Récepteur selon la revendication 1, caractérisé en ce que le processeur (P) réalise, avec l'aide de l'erreur angulaire, une correction angulaire du signal numérisé d'entrée, en ce que le processeur réalise en outre une corrélation du signal de réception corrigé avec le préambule de synchronisation stocké en obtenant ainsi une réponse d'impulsion améliorée, en réalisant ensuite une corrélation de la réponse d'impulsion améliorée avec la partie d'information du signal de réception corrigé et en réalisant ensuite une corrélation de chaque symbole de la partie d'information avec chaque symbole stocké dans la mémoire (S).

3. Récepteur selon la revendication 2, caractérisé en ce que le processeur (P) corrige le signal numérisé de réception à l'aide de l'erreur angulaire calculée pour l'intervalle de temps précédent, puis réalise une corrélation de la partie d'information avec la réponse d'impulsion de canal en corrigeant ensuite chaque symbole de la partie d'information avec chaque symbole du jeu de symboles stocké dans la mémoire (S).

4. Récepteur selon l'une quelconque des revendications 1 à 3, caractérisé en ce que le processeur (P) multiplie la partie d'information du signal de réception par une séquence de pseudo-bruit.

5. Récepteur selon l'une quelconque des revendications 1 à 4, caractérisé en ce que le processeur (p) (matched-filter-concept) ne prend en compte, pendant la corrélation avec la réponse d'impulsion de canal, que la partie de la réponse d'impulsion de canal dont la valeur dépasse une certaine valeur.

6. Récepteur selon l'une quelconque des revendications 1 à 5, caractérisé en ce que le processeur réalise, dans le cas de deux symboles qui se suivent l'un après l'autre, une correction angulaire du symbole qui suit avec l'aide de la corrélation des symboles de la partie d'information avec le jeu de symboles stocké pour celui des symboles qui précèdent.

7. Procédé pour mettre en oeuvre un système numérique de radiocommunication cellulaire dans lequel le trafic hertzien est réalisé en multiplexage temporel à accès multiple, et en technique d'étalage de spectre et dans lequel à chaque intervalle de temps de la transmission en multiplexage temporel, le signal de transmission comprend un préambule de synchronisation et une partie d'information, et dans lequel des cellules avoisinantes utilisent des préambules de synchronisation différents, caractérisé en ce qu'un signal de réception numérisé est transformé à une fréquence intermédiaire de 0 et est corrélé avec un préambule de synchronisation stocké dans une mémoire (S) afin de déterminer une réponse d'impulsion de canal appartenant au canal de transmission ainsi qu'un premier nombre complexe, et en ce qu'un signal d'en-queue est en outre obtenu par corrélation de l'en-queue du préambule de synchronisation avec la réponse d'impulsion de canal, et en ce qu'en outre un deuxième nombre complexe est obtenu par corrélation du signal d'en-queue avec l'en-queue stocké, ce deuxième nombre complexe étant utilisé avec le premier nombre complexe, pour calculer une erreur angulaire pour chaque valeur d'échantillonnage.

8. Procédé selon la revendication 7, caractérisé en ce que, dans une étape ultérieure, on réalise une correction angulaire du signal de réception numérisé en utilisant la valeur calculée de l'erreur angulaire, en ce que, dans des étapes ultérieures, on obtient une réponse améliorée d'impulsion de canal à partir du signal de réception corrigé par corrélation avec le préambule de synchronisation stocké, on réalise la corrélation de cette réponse améliorée avec la partie d'information du signal de réception corrigé et ensuite la corrélation de chaque symbole de la partie d'information avec chaque symbole du jeu de symboles stocké.

9. Procédé selon la revendication 7, caractérisé en ce qu'avant la première étape, on réalise une correction angulaire du signal de réception numérisé en utilisant l'erreur angulaire connue à partir de l'intervalle de temps précédent, en ce que dans la deuxième étape, on réalise également la corrélation de la partie d'information avec la réponse d'impulsion de canal et en ce qu'après la troisième étape, on réalise la corrélation de chaque symbole de la partie d'information avec chaque symbole du jeu de symboles.

Fig. 1